# EUROPÄISCHE PATENTSCHRIFT

(11) **EP 3 106 333 B1**
(45) Veröffentlichungstag und Bekanntmachung des Hinweises auf die Patenterteilung: **04.03.2020**
(21) Anmeldenummer: 16170777.3
(22) Anmeldetag: 23.05.2016
(51) Int. Cl.: B60J 7/10, B60J 5/06

(54) **FAHRZEUGAUFBAU, INSBESONDERE FÜR NUTZFAHRZEUGE, NUTZFAHRZEUG MIT EINEM SOLCHEN FAHRZEUGAUFBAU UND HERSTELLUNGSVERFAHREN**
VEHICLE BODY, IN PARTICULAR FOR COMMERCIAL VEHICLES, COMMERCIAL VEHICLE WITH SUCH A VEHICLE BODY AND METHOD OF MANUFACTURING
CARROSSERIE DE VEHICULE, EN PARTICULIER POUR VEHICULES UTILITAIRES, VEHICULE UTILITAIRE COMPRENANT UNE TELLE CARROSSERIE ET PROCEDE DE FABRICATION

(30) Priorität: 03.06.2015 DE 102015108782
(43) Veröffentlichungstag der Anmeldung: 21.12.2016
(73) Patentinhaber: Kögel Trailer GmbH, 89349 Burtenbach (DE)
(72) Erfinder: Bielohlawek, Daniel, 86444 Affing (DE)
(74) Vertreter: Kilchert, Jochen

(56) Entgegenhaltungen:
- EP-A2- 2 371 594
- DE-A1-102004 045 908
- GB-A- 1 262 880
- GB-A- 1 542 812
- GB-A- 2 327 450
- US-A1- 2010 237 647

## Beschreibung

Die Erfindung betrifft einen Fahrzeugaufbau, insbesondere für Nutzfahrzeuge, mit wenigstens einer Mittelrunge und einer Plane, die in einem geschlossenen Zustand durch ein Befestigungssystem an der Mittelrunge fixierbar ist und einen Laderaum begrenzt. Ferner betrifft die Erfindung ein Nutzfahrzeug mit einem solchen Fahrzeugaufbau. Außerdem betrifft die Erfindung ein Verfahren zum Herstellen eines derartigen Fahrzeugaufbaus oder Nutzfahrzeugs.

Aus dem Stand der Technik sind sogenannte Plankenplanen bekannt. Darunter sind Seitenplanen zu verstehen, die auf der Innenseite vertikal zur Fahrtrichtung verlaufende Planentaschen aufweisen. In diese Planentaschen sind Aluminium- oder Kunststoffplanken, sogenannte Profile, eingeschoben. Diese Aluminium- oder Kunststoffplanken bewirken eine höhere Steifigkeit der Seitenplane. Eine Plankenplane kann beim Be- und Entladen zusammen mit den Aluminium- oder Kunststoffplanken verschoben werden. Dies ist sehr zeitsparend, so dass Plankenplanen in vielen Fällen anstelle von üblichen horizontalen Aluminiumspriegeln, welche zwischen Rungen in Lattentaschen eingelegt werden müssen, verwendet werden.

Es hat sich allerdings gezeigt, dass sich eine in einem Laderaum eines Fahrzeugaufbaus befindliche Ladung bei der Verwendung von Plankenplanen in Kurvenfahrten sehr weit zur Seite neigen kann und sich die Ladung eventuell nicht mehr aufrichtet. Dokument DE 10 2004 045 908 offenbart eine Plane-Spanneinrichtung, die für eine Mittelrunge geeignet ist.

Aus DE 10 2010 012 685 B4 ist ein Fahrzeugaufbau bekannt, bei dem eine Seitenplane an einer Vertikalrunge befestigt werden kann. An einem Verstärkungselement der Seitenplane befinden sich Befestigungselemente, die in Befestigungsaufnahmen eingreifen, die im Bereich der Vertikalrunge ausgebildet sind. An dem Verstärkungselement der Seitenplane kann an der Außenseite der Plane eine Schlaufe angeordnet sein, um die Plane im Bereich des Verstärkungselements anheben bzw. herunterziehen zu können. Ein derartiges Befestigen des Verstärkungselements an einer Vertikalrunge ist allerdings sehr kraftaufwendig.

Um einem Anwender ein Betätigen dieser Schlaufe zu ermöglichen, kann diese Schlaufe lediglich in einem unteren Planenbereich ausgebildet sein. Das Verstärkungselement kann deshalb im oberen Planenbereich vom Anwender nicht immer zufriedenstellend am Fahrzeugaufbau befestigt werden oder von diesem gelöst werden. Daher kann es vor allen Dingen im oberen Planenbereich zu einem ungewollten Verhaken des Befestigungselements mit anderen Elementen des Fahrzeugaufbaus kommen.

Aus dem Vorgenannten ist es daher die Aufgabe der vorliegenden Erfindung einen weiterentwickelten Fahrzeugaufbau, insbesondere für Nutzfahrzeuge, anzugeben, der ein einfach zu bedienendes Befestigungssystem umfasst, so dass eine Plane an einer Mittelrunge fixierbar ist. Des Weiteren ist es die Aufgabe der vorliegenden Erfindung ein Nutzfahrzeug mit einem derart weiterentwickelten Fahrzeugaufbau anzugeben. Ferner ist es Aufgabe der Erfindung, ein Verfahren zum Herstellen eines erfindungsgemäßen Fahrzeugaufbaus oder eines erfindungsgemäßen Nutzfahrzeugs anzugeben.

Erfindungsgemäß wird diese Aufgabe im Hinblick auf den Fahrzeugaufbau durch den Gegenstand des Anspruches 1, im Hinblick auf das Nutzfahrzeug durch den Gegenstand des Anspruchs 14 und im Hinblick auf das Verfahren zum Herstellen eines Fahrzeugaufbaus oder Nutzfahrzeugs durch den Gegenstand des Anspruchs 15 gelöst.

Die Erfindung beruht auf dem Gedanken, einen Fahrzeugaufbau, insbesondere für Nutzfahrzeuge, mit wenigstens einer Mittelrunge und einer Plane anzugeben, wobei die Plane in einem geschlossenen Zustand durch ein Befestigungssystem an der Mittelrunge fixierbar ist und einen Laderaum begrenzt. Das Befestigungssystem weist mindestens ein erstes der Plane zugeordnetes Befestigungselement und mindestens ein zweites an der Mittelrunge ausgebildetes Befestigungselement auf, wobei das erste Befestigungselement und das zweite Befestigungselement gegenseitig in lösbaren Eingriff bringbar sind.

Erfindungsgemäß ist das erste Befestigungselement, also das der Plane zugeordnete Befestigungselement, mittelbar oder unmittelbar mit einem Zugelement verbunden, wobei das Zugelement unabhängig von der Plane von außerhalb des Laderaums betätigbar ist. Da das mindestens erste Befestigungselement an dem Zugelement verbunden ist, kann das erste Befestigungselement mit Hilfe des von außerhalb des Laderaums betätigbaren Zugelements betätigt werden. Dies stellt eine leichtere Handhabung für den Benutzer des Fahrzeugaufbaus dar.

Das Zugelement ist in vertikaler Richtung unabhängig von der Plane bewegbar. Dies hat den Vorteil, dass zum Bewegen des mindestens einen ersten Befestigungselements nicht die vollständige Plane verschoben werden bzw. bewegt werden muss sondern lediglich das Zugelement. Zur Bewegung des Zugelements ist eine geringere Kraft notwendig, als diese zur Bewegung einer vollständigen Plane notwendig ist.

Das Zugelement kann beispielsweise ein Zugband und/oder ein Zuggurt und/oder ein Zugseil und/oder eine Zugkette sein.

Das Zugelement ist, zumindest abschnittsweise, insbesondere größtenteils, an der zum Laderaum weisenden Innenseite der Plane angeordnet. Mit anderen Worten verläuft das Zugelement, mindestens abschnittsweise, insbesondere größtenteils, an der zum Laderaum weisenden Innenseite der Plane. Das mindestens eine erste Befestigungselement ist ebenfalls an der zum Laderaum weisenden Innenseite des Zugelements angeordnet bzw. angebracht.

Das Zugelement kann durch taschenartige Aufnahmen verlaufen. Bei den taschartigen Aufnahmen kann es sich beispielsweise um Planentaschen handeln.

Diese sind derart an der Innenseite der Plane angeordnet, dass das Zugelement in vertikaler Richtung verläuft, d.h. dass ein Zugelement in eine obere Öffnung einer taschenartigen Aufnahme eingeführt und aus einer unteren Öffnung der taschenartigen Aufnahme herausgeführt werden kann. Vorzugsweise ist ein Zugelement durch mehrere taschenartige Aufnahmen geführt bzw. gefädelt. Der Verlauf durch mindestens eine taschenartige Aufnahme bzw. durch mindestens eine Planentasche bewirkt einen gewünschten geraden Verlauf des Zugelements.

Das Zugelement verläuft mit anderen Worten in mehreren beispielsweise aufgeschweißten und/oder vernähten Planentaschen bzw. taschenartigen Aufnahmen vertikal verschiebbar. Auf die gesamte Planenhöhe verteilt ist eine Planentaschenunterbrechung ausgebildet, insbesondere sind mehrere Planentaschenunterbrechungen ausgebildet. Im Bereich der Planentaschenunterbrechung ist das Zugelement vom Laderaum aus zugänglich ausgebildet. Das erste Befestigungselement am Zugelement kann als Fanghaken ausgebildet sein. Ein derartiger Fanghaken ist am Zugelement im Bereich der mindestens einen Planentaschenunterbrechung ausgebildet. Bei einer vertikalen Bewegung des Zugelements wird das erste Befestigungselement, insbesondere der Fanghaken, mitbewegt.

Es ist möglich, dass das erste Befestigungselement als eine Aussparung in einer Planke oder einem plattenartigen Element ausgebildet ist, wobei die Planke oder das plattenartige Element mittelbar oder unmittelbar mit dem Zugelement verbunden ist.

Eine beschriebene Planke oder ein beschriebenes plattenartiges Element kann ebenfalls in einer taschenartigen Aufnahme, insbesondere in einer Planentasche beweglich angeordnet sein. Die taschenartige Aufnahme weist in dieser Ausführungsform neben einer oberen und einer unteren Öffnung mindestens eine weitere Öffnung auf, die zum Laderaum des Fahrzeugaufbaus hin ausgebildet ist. Die weitere Öffnung dient dazu, dass die mindestens eine Aussparung in der Planke oder dem plattenartigen Element vom Laderaum aus zugänglich ausgebildet ist. Mit anderen Worten kann in die Aussparung ein weiteres Element, insbesondere das zweite Befestigungselement, eingreifen.

Die Aussparung kann als Langloch oder schlüssellochartig ausgebildet sein.

Die Planke oder das plattenartige Element kann hohl ausgebildet sein. Der Hohlraum der Planke oder des plattenartigen Elements verläuft vorzugsweise vertikal. Es ist möglich, dass das Zugelement abschnittsweise durch den Hohlraum der Planke oder des plattenartigen Elements geführt ist. Des Weiteren ist es möglich, dass das Zugelement zumindest abschnittsweise mit der Planke oder dem plattenartigen Element verbunden, insbesondere an diesem fixiert, ist.

Das zweite Befestigungselement, das an der Mittelrunge ausgebildet ist, kann winkelförmig oder schraubenförmig oder bolzenförmig ausgebildet sein. Ein derart winkelförmig oder schraubenförmig oder bolzenförmig ausgebildetes zweites Befestigungselement kann beispielsweise in ein erstes Befestigungselement eingreifen, sofern dieses als eine Aussparung in einer Planke oder einem plattenartigen Element ausgebildet ist.

Außerdem ist es möglich, dass das zweite Befestigungselement als ein von der Mittelrunge seitlich abstehender Fangwinkel oder als eine seitlich abstehende Leiste ausgebildet ist. Als seitlich von der Mittelrunge abstehend ist ein derartiges Element zu bezeichnen, das in Fahrtrichtung oder entgegen der Fahrtrichtung weist. Eine derartige Ausbildung des zweiten Befestigungselements ist beispielsweise dann vorgesehen, wenn das erste Befestigungselement als Fanghaken ausgebildet ist. Der Fanghaken kann vertikal von oben in einen seitlich abstehenden Fangwinkel oder in eine seitlich abstehende Leiste eingreifen.

Bei dem ersten am Zugelement ausgebildeten Befestigungselement kann es sich um einen Fanghaken und/oder eine Fangkugel und/oder einen Ring und/oder einen Bügel handeln. Sofern das erste Befestigungselement als eine Aussparung ausgebildet ist, kann diese Aussparung in einer Planke und/oder einem plattenartigen Element und/oder einem Flachstahl und/oder einer Leiste ausgebildet sein.

In einer weiteren Ausführungsform der Erfindung kann das Zugelement ein planenspannerartiges Element aufweisen, das an der Außenseite der Plane, insbesondere im unteren Planenbereich, zugänglich angeordnet ist. Ein planenspannerartiges Element dient dazu, am Zugelement eine Zugbewegung ausüben zu können und eine mittels Zugbewegung erreichte Position des mindestens einen ersten Befestigungselements durch Befestigen des plannenspannerartigen Elements an einem Rahmenteil oder ähnlichem Element des Fahrzeugaufbaus fixieren zu können.

Des Weiteren kann das Zugelement zusätzlich oder alternativ an einem Ende eine Schlaufe aufweisen, das an der Außenseite der Plane, insbesondere im unteren Planenbereich, zugänglich angeordnet ist. Eine Schlaufe, insbesondere Handschlaufe, die beispielsweise aus Gurtmaterial gefertigt sein kann, dient zur Auf- und Abbewegung des Zugelements. Sofern an dem Fahrzeugaufbau Fixierelemente vorgesehen sind, kann die Schlaufe auch am Fahrzeugaufbau fixiert werden. Das planenspannerartige Element und/oder die Schlaufe kann bzw. können an einem Ende des Zugelements ausgebildet sein. Hierzu ist das Zugelement beispielsweise mittels einer in der Plane ausgebildeten Durchführung von der Innenseite der Plane zur Außenseite der Plane geführt. Eine in der Plane ausgebildete Durchführung ist insbesondere im unteren Planenbereich ausgebildet.

Das planenspannerartige Element kann als Planenspanner oder Zurrgurtspanner oder Seilspanner oder Kettenspanner ausgebildet sein.

Ein erstes Ende des Zugelements kann im Laderaum, insbesondere in der Nähe eines Dachholms, über ein elastisches Element, insbesondere über eine Feder und/oder über einen Expander und/oder über einen Federdämpfer, an der Innenseite der Plane und/oder an einem Abschnitt des Dachholms und/oder an einem Seitenspriegel befestigt sein.

Es ist möglich, dass das Zugelement selbst als elastisches Element ausgebildet ist, d.h., dass das Zugelement einen Abschnitt mit im Vergleich zum restlichen Zugelement höherer Elastizität aufweist. Beispielsweise ist es möglich, dass an der Innenseite der Plane ein Befestigungsmittel, beispielsweise in Form einer angeschweißten Schlaufe, ausgebildet ist und das erste Ende des Zugelements über das elastische Element mit dem Befestigungsmittel verbunden ist. Das Befestigungsmittel kann außerdem am Dachholm oder einem Seitenspriegel ausgebildet sein. Das elastische Element dient dazu, dass das Zugelement in vertikaler Richtung unabhängig von der Plane bewegbar ist. Um das Zugelement in vertikaler Richtung nach unten bewegen zu können, muss demnach eine Kraft aufgewendet werden, die gegen die Vorspannungskraft des elastischen Elements wirkt.

Das Zugelement ist beispielsweise derart ausgebildet, dass das erste Befestigungselement und das zweite Befestigungselement durch eine Zugbewegung an einem zweiten Ende des Zugelements von einer Lösestellung in eine Eingriffsstellung bringbar sind. Bei dem zweiten Ende des Zugelements kann es sich um das Ende des Zugelements handeln, das nicht mit einem elastischen Element verbunden ist. Beispielsweise ist an dem zweiten Ende des Zugelements ein planenspannerartiges Element und/oder eine Schlaufe ausgebildet.

Durch eine Zugbewegung nach unten, d.h. in Richtung des Bodens, auf dem sich der Fahrzeugaufbau befindet, wird eine Zugkraft auf das Zugelement ausgeübt, so dass die Vorspannkraft des elastischen Elements überwunden wird und das mindestens eine am Zugelement ausgebildete erste Befestigungselement ebenfalls nach unten in Richtung des Bodens bewegt wird. Aufgrund der Zugbewegung bzw. Bewegung nach unten ist das erste Befestigungselement in Wirkverbindung mit mindestens einem zweiten Befestigungselement bringbar. Insbesondere werden das erste Befestigungselement und das zweite Befestigungselement in eine Eingriffstellung gebracht. Eine derartige Eingriffsstellung bewirkt ein Fixieren der Plane an die Mittelrunge.

In einer Ausführungsform der Erfindung ist es denkbar, dass durch eine Zugbewegung ein am Zugelement ausgebildeter Fanghaken nach unten bewegt wird und durch einen seitlich von der Mittelrunge abstehenden Fangwinkel in eine Eingriffsstellung gebracht wird. Der Fanghaken kann in den Fangwinkel oder die seitlich abstehende Leiste von oben einhaken.

Sofern das zweite Ende des Zugelements nicht mehr mit Hilfe eines planenspannerartigen Elements und/oder einer Schlaufe am Fahrzeugaufbau fixiert ist und keine Kraft mehr auf das zweite Ende des Zugelements wirkt, wird das Zugelement mittels des elastischen Elements zurückgestellt, d.h. vertikal nach oben bewegt. Das erste Befestigungselement wird vom zweiten Befestigungselement wegbewegt, so dass das erste Befestigungselement und das zweite Befestigungselement in eine Lösestellung bringbar sind.

Die oben beschriebenen Ausführungsformen hinsichtlich des ersten Befestigungselements, das am Zugelement ausgebildet ist und des zweiten Befestigungselements, das an der Mittelrunge ausgebildet ist, ist es möglich, dass die Ausführungen hinsichtlich des ersten Befestigungselements und des zweiten Befestigungselements umgekehrt ausgebildet sind.

Folglich ist es möglich, dass das zweite Befestigungselement, das an der Mittelrunge ausgebildet ist, als Fanghaken und/oder Fangkugel und/oder Fangwinkel und/oder Ring und/oder Bügel und/oder Haken ausgebildet ist. Das zweite Befestigungselement kann auch als eine Aussparung in einer Planke oder einem plattenartigen Element ausgebildet sein. Dementsprechend kann das erste Befestigungselement winkelförmig oder schraubenförmig oder bolzenförmig ausgebildet sein. Ebenfalls ist es denkbar, dass das erste Befestigungselement als vom Zugelement horizontal abstehender Fangwinkel oder als horizontal abstehende Leiste ausgebildet ist.

An einem Zugelement können mehrere erste Befestigungselemente ausgebildet sein, die zueinander vertikal beabstandet angeordnet sind. An der Mittelrunge können mehrere zweite Befestigungselemente ausgebildet sein, die zueinander vertikal beabstandet angeordnet sind. Der vertikale Abstand zwischen den ersten Befestigungselementen entspricht in etwa dem vertikalen Abstand zwischen den zweiten Befestigungselementen. Dadurch wird sichergestellt, dass alle ersten Befestigungselemente mit jeweils einem zweiten Befestigungselement in lösbaren Eingriff bringbar sind.

An einer Mittelrunge können auf einer horizontalen Ebene mehrere, insbesondere zwei, zweite Befestigungselemente ausgebildet sein.

In einer weiteren Ausführungsform der Erfindung ist das Zugelement im Laderaum, insbesondere in Nähe des Dachholms, über eine Umlenkeinheit, die vorzugsweise ein rollenartiges oder ringförmiges Element aufweist, umgelenkt. Das Zugelement kann schlaufenartig um ein beispielsweise rollenartiges Element gelegt sein. Außerdem ist es möglich, dass das Zugelement in ein ringförmiges Element eingefädelt ist.

Das Zugelement kann derart umgelenkt sein, dass das erste Befestigungselement und das zweite Befestigungselement durch eine Zugbewegung an einem ersten Ende des Zugelements in eine Lösestellung bringbar sind. Sofern das erste Befestigungselement als eine Aussparung in einer Planke oder einem plattenartigen Element ausgebildet ist, kann die Planke oder das plattenartige Element durch eine Zugbewegung an dem ersten Ende des Zugelements nach oben, d.h. in Richtung der Umlenkeinheit bewegt werden. Ein möglicherweise in der Aussparung der Planke oder des plattenartigen Elements eingerastetes zweites Befestigungselement kann durch eine Bewegung der Planke oder des plattenartigen Elements nach oben aus der Aussparung gelöst werden. Vorzugsweise verläuft das Zugelement in einem Hohlraum der Planke oder des plattenartigen Elements, so dass eine einfache Umlenkung des Zugelements ermöglicht ist.

Das Zugelement ist vorzugsweise derart umgelenkt, dass das erste Befestigungselement und das zweite Befestigungselement durch eine Zugbewegung an einem zweiten Ende bzw. an einem weiteren Ende des Zugelements in eine Eingriffstellung bringbar sind. Eine Zugbewegung an dem zweiten Ende des Zugelements kann bewirken, dass eine Planke oder ein plattenartiges Element nach unten, d.h. von der Umlenkeinheit wegbewegt wird. Aufgrund des nach unten Ziehens der Planke oder des plattenartigen Elements kann ein beispielsweise winkelförmig oder schraubenförmig oder bolzenförmig ausgebildetes zweites Befestigungselement, das an einer Mittelrunge ausgebildet ist, in eine Aussparung der Planke oder des plattenartigen Elements eingeführt werden.

Aufgrund eine nach unten Ziehens des Zugelements nach dem in Eingriff bringen des zweiten Befestigungselements mit dem ersten Befestigungselements wird die Aussparung in Richtung des Bodens bewegt. Ein in die Aussparung eingeführtes zweites Befestigungselement bildet zusammen mit der Aussparung eine feste formschlüssige Verbindung. Das zweite Befestigungselement wird ähnlich wie bei einem Bajonetteverschluss zunächst in das erste Befestigungselement, nämlich in die Aussparung, eingeführt, so dass das weitere Bewegen der Aussparung nach unten bzw. in Richtung des Bodens die feste formschlüssige Verbindung bewirkt.

Vorzugsweise ist an dem ersten Ende des Zugelements eine Schlaufe ausgebildet. Diese Schlaufe ist an der Außenseite der Plane, insbesondere im unteren Planenbereich, zugänglich angeordnet. Das Zugelement ist hierzu mittels einer in der Plane ausgebildeten Durchführung vom Laderaum nach außen geführt.

Am zweiten Ende des Zugelements befindet sich vorzugsweise ein planenspannerartiges Element, das ebenfalls an der Außenseite der Plane, insbesondere im unteren Planenbereich, zugänglich angeordnet ist. Hierzu ist das Zugelement auch im Bereich des zweiten Endes vom Laderaum mittels einer in der Plane ausgebildeten Durchführung nach außen geführt. Im Bereich des zweiten Endes des Zugelements kann außerdem eine Schlaufenplatte ausgebildet sein, mit der die Länge des Zugelements einstellbar ist. Sofern die Plane aufgrund Alterungserscheinungen gelängt ist, kann das Zugelement entsprechend an der Schlaufenplatte nachjustiert werden.

In einer weiteren Ausführungsform der Erfindung ist es möglich, dass im Bereich einer Mittelrunge zwei, im Wesentlichen parallel zueinander verlaufende, Zugelemente ausgebildet sind. An beiden Zugelementen ist mindestens jeweils ein erstes Befestigungselement ausgebildet. Mit Hilfe von zwei parallel zueinander verlaufenden Zugelementen ist eine stärkere Fixierung der Plane an einer Mittelrunge möglich. Hierzu können an einer Mittelrunge mehrere zweite Befestigungselemente ausgebildet sein. Insbesondere sind jeweils zwei zweite Befestigungselemente auf gleicher Höhe an einer Mittelrunge ausgebildet. Insbesondere sind die zweiten Befestigungselemente als von der Mittelrunge seitlich abstehende Fangwinkel oder seitlich abstehende Leisten ausgebildet. Jeweils ein erstes Befestigungselement eines ersten Zugelements und ein erstes Befestigungselement eines zweiten Zugelements haken demnach in ein zweites Befestigungselement der Mittelrunge ein.

Vorzugsweise sind an einer Mittelrunge mehrere übereinander beabstandet zueinander ausgebildete zweite Befestigungselemente ausgebildet. Auch im Zusammenhang mit einem Befestigungssystem, das erste Befestigungselemente als Aussparungen in einer Planke oder einem plattenartigen Element aufweist, ist es möglich, das jeweils zwei nebeneinander, im Wesentlichen parallel zueinander verlaufende, Zugelemente ausgebildet sind. An einer Mittelrunge sind somit in vertikal gleicher Höhe mindestens zwei zweite Befestigungselemente, die vorzugsweise winkelförmig oder schraubenförmig oder bolzenförmig ausgebildet sind, ausgebildet.

Ein weiterer Aspekt der vorliegenden Erfindung betrifft ein Nutzfahrzeug, insbesondere einen Planensattelauflieger, mit einem zuvor beschriebenen Fahrzeugaufbau.

Ferner befasst sich die vorliegende Erfindung mit einem Verfahren zum Herstellen eines Fahrzeugaufbaus oder eines Nutzfahrzeugs, wobei wenigstens ein zweites Befestigungselement des Befestigungssystems an der Mittelrunge fixiert wird und wenigstens ein Zugelement, an dem mindestens ein erstes Befestigungselement des Befestigungssystems ausgebildet wird, im Laderaum, insbesondere in Nähe des Dachholms, beispielsweise an der Innenseite der Plane und/oder an einem Abschnitt des Dachholms und/oder an einem Seitenspriegel, befestigt wird.

Die Erfindung wird im Folgenden anhand von Ausführungsbeispielen unter Bezugnahme auf die beigefügten, schematischen Zeichnungen näher erläutert. Darin zeigen:
- Figs. 1a-1c:: verschiedene Ansichten auf ein Befestigungssystem gemäß einer ersten Ausführungsform; und
- Figs. 2a-2b:: verschiedene Ansichten auf ein Befestigungssystem gemäß einem zweiten Ausführungsbeispiel.

Im Folgenden werden für gleiche und gleichwirkende Teile gleiche Bezugsziffern verwendet.

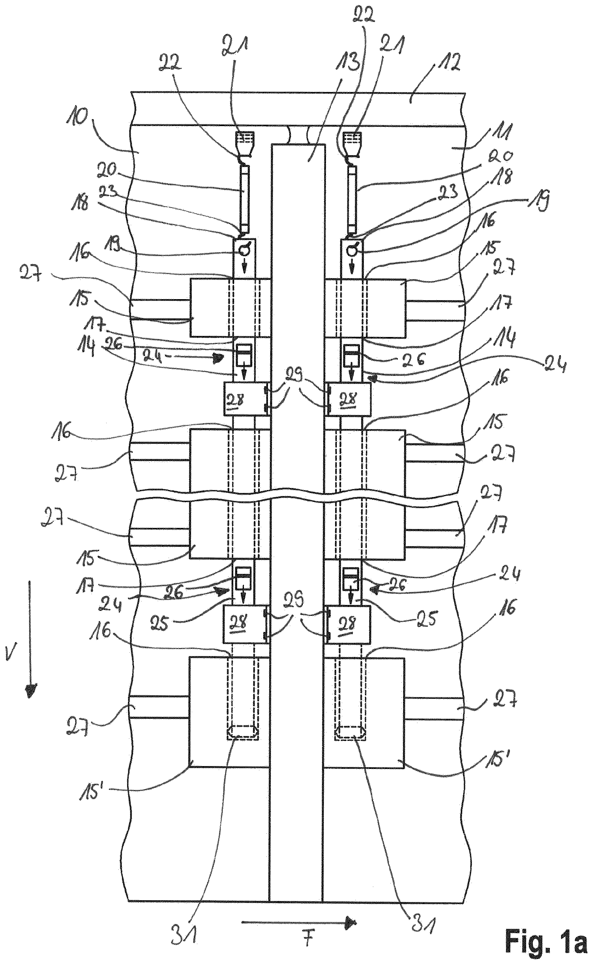

In Fig. 1a ist eine Plane 10 eines Fahrzeugaufbaus dargestellt mit Blick auf die Innenseite 11 der Plane 10, die in Richtung des Laderaums weist. Die Plane ist an einem Dachholm 12 befestigt.

Ebenfalls dargestellt ist eine Mittelrunge 13. Im Wesentlichen parallel zur Mittelrunge 13 sind zwei Zugelemente 14 links und rechts neben der Mittelrunge 13 ausgebildet. Bei dem Zugelement 14 handelt es sich um einen Zuggurt. Die Zugelemente 14 sind durch Planentaschen 15 geführt. Die Planentaschen 15 weisen jeweils eine obere Öffnung 16 und eine untere Öffnung 17 auf. Die Zugelemente 14 sind somit durch die obere Öffnung 16 in die Planentasche 15 eingeführt und werden an der unteren Öffnung 17 aus der Planentasche herausgeführt. Die Planentaschen 15 bewirken eine im Wesentlichen senkrechte Führung der Zugelemente 14.

Die Zugelemente 14 weisen jeweils am ersten Ende 18 eine Öse 19 auf. Mit Hilfe eines elastischen Elements 20, das im dargestellten Beispiel als Feder ausgebildet ist, ist das erste Ende 18 des jeweiligen Zugelements 14 in Nähe des Dachholms 12 an der Innenseite 11 der Plane 10 befestigt. Hierzu ist an der Innenseite 11 der Plane 10 eine Schlaufe 21 angeschweißt, in welche ein Haken 22 des elastischen Elements 20 greifen kann. Ein unterer Haken 23 kann in die Öse 19 des Zugelements 14 eingreifen. Selbstverständlich sind alternative Befestigungsmöglichkeiten denkbar um das erste Ende 18 des Zugelements 14 über das elastische Element 20 mit dem Fahrzeugaufbau, insbesondere mit der Innenseite 11 der Plane 10 oder mit dem Dachholm 12 des Fahrzeugaufbaus, zu verbinden bzw. daran zu befestigen.

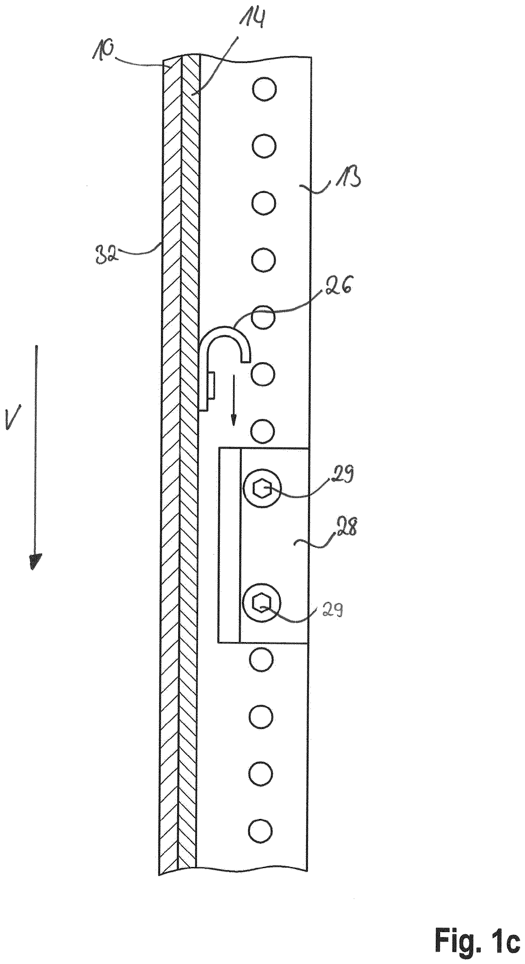

Zwischen den Planentaschen 15 sind freie Abschnitte 24 ausgebildet. In diesen freien Abschnitten 24 ist das Zugelement 14 nicht innerhalb von Planentaschen 15 geführt. Vom Laderaum aus ist somit ein Zugriff auf die Zugelemente 14 möglich. An den zum Laderaum weisenden Seiten 25 der Zugelemente 14 sind erste Befestigungselemente 26 ausgebildet. Im in Fig. 1a dargestellten Beispiel handelt es sich bei den ersten Befestigungselementen um Fanghaken (siehe Fig. 1c).

Die Planentaschen 15 sind mit Hilfe von Schweißgurten 27 auf die Innenseite 11 der Plane 10 aufgeschweißt. Alternativ ist denkbar, dass die Planentaschen 15 auf die Innenseite 11 der Plane 10 aufgeklebt und/oder vernäht sind.

Mit Hilfe des elastischen Elements 20 wird das Zugelement 14 in einem ungespannten Zustand in einer Lösestellung gehalten. In dieser Lösestellung sind die ersten Befestigungselemente 26 nicht mit einem zweiten Befestigungselement 28 in Eingriff gebracht.

Die zweiten Befestigungselemente 28 sind im dargestellten Beispiel an der Mittelrunge 13 ausgebildet. Die zweiten Befestigungselemente 28 sind als seitlich von der Mittelrunge 13 abstehende Fangwinkel ausgebildet. Die Fangwinkel bzw. die zweiten Befestigungselemente 28 weisen demnach in oder entgegen der Fahrtrichtung F. Die zweiten Befestigungselemente 28 können beispielsweise mittels Schrauben 29 an der Mittelrunge 13 angebracht werden.

Das Zugelement 14 ist lediglich am ersten Ende 18 mit der Plane 10 über ein elastisches Element 20 verbunden. Demnach kann das Zugelement 14 in vertikaler Richtung V unabhängig von der Plane 10 bewegt werden. Um die Zugelemente 14 zu bewegen, kann das zweite Ende 30 des Zugelements 14 in vertikaler Richtung V mit einer Zugkraft beaufschlagt werden.

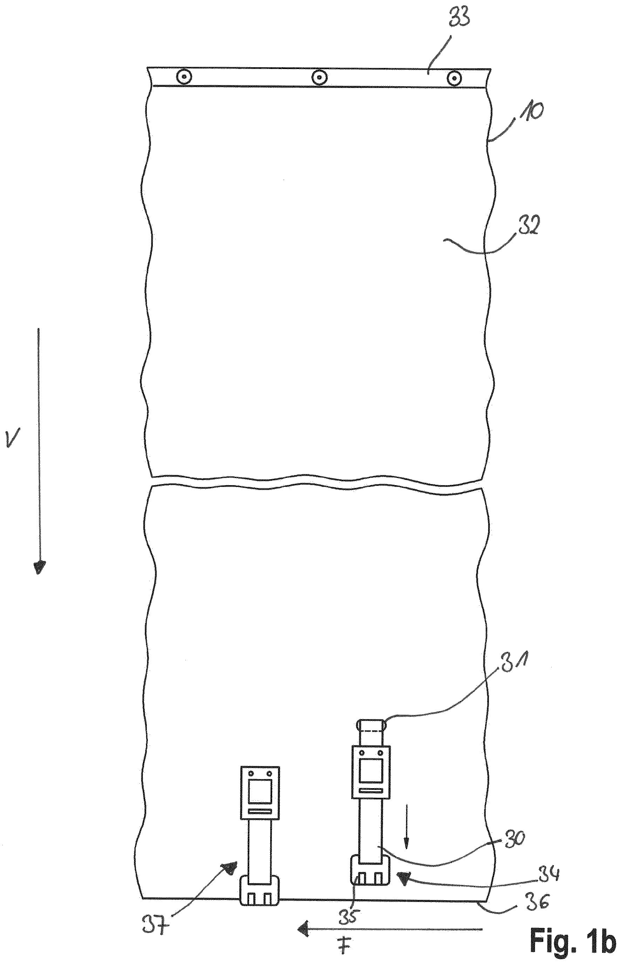

Um eine gute Handhabbarkeit des Zugelements 14 zu ermöglichen ist das Zugelement 14 von dem Laderaum mittels einer Durchführung 31 nach außen geführt. Dieser Zusammenhang ist in Fig. 1b dargestellt. Diese Figur zeigt die Außenseite 32 der Plane 10. Ebenfalls ist eine Dachplane 33 zu erkennen, die über den Dachholm 12 gespannt ist. Am zweiten Ende 30 des Zugelements 14 ist ein planenspannerartiges Element 34 ausgebildet. Sofern das planenspannerartige Element 34 in vertikaler Richtung V nach unten gezogen wird, wird das Zugelement 14 insgesamt nach unten bewegt. Die ersten Befestigungselemente 26 werden mit dem Zugelement 14 zusammen in vertikaler Richtung V bewegt.

Wie in Fig. 1c dargestellt ist, kann das erste Befestigungselement 26 durch Bewegung in vertikaler Richtung V in das zweite Befestigungselement 28 einhaken. Dieses Einhaken bzw. das in Eingriff bringen des ersten Befestigungselements 26 und des zweiten Befestigungselements 28 erfolgt mit allen ersten Befestigungselementen 26 und allen zweiten Befestigungselementen 28.

Das Zugelement 14 ist in vertikaler Richtung V entgegen der Vorspannkraft des elastischen Elements 20 mit einer Zugbewegung beaufschlagbar. Das planenspannerartige Element 34 kann mit einem Haken 35 an einer Kante 36 des Fahrzeugaufbaus eingehakt werden. Somit ist das Zugelement 14 unabhängig von der Plane 10 von außerhalb des Laderaums betätigbar und spannbar. Mit Hilfe des planenspannerartigen Elements 34 kann außerdem die Länge des Zugelements 14 am zweiten Ende 30 eingestellt werden.

Im Bereich der Durchführung 31 ist eine untere Planentasche 15' ausgebildet. Diese Planentasche 15' weist lediglich eine obere Öffnung 16 auf. Eine untere Öffnung 17 ist in diesem Fall nicht ausgebildet. Dies sorgt für eine zusätzliche Versteifung der Plane 10 im Bereich der Durchführung 31.

Aus Fig. 1b geht des Weiteren hervor, dass neben dem planenspannerartigen Element 34, das am zweiten Ende 30 des Zugelements 14 ausgebildet ist, auch ein Standard-Planenspanner 37 ausgebildet sein kann. Mit Hilfe dieses Planenspanners 37 kann die Plane 10 an einer Kante 36 des Fahrzeugaufbaus eingehakt werden. Die Plane 10 kann somit sowohl im Bereich der Zugelemente 14, insbesondere im Bereich der Mittelrungen 13, als auch in den restlichen Bereichen zwischen mehreren Mittelrungen 13 fest verspannt werden.

Sobald das planenspannerartige Element 34, insbesondere der Haken 35, von der Kante 36 gelöst wird und das zweite Ende 30 des Zugelements 14 losgelassen wird, wirkt die Vorspannkraft des elastischen Elements 20, so dass das Zugelement 14 zusammen mit den ersten Befestigungselementen 26 in Richtung des Dachholms 12 bewegt werden. Die ersten Befestigungselemente 26 werden demnach in Relation zu den zweiten Befestigungselementen 28 in eine Lösestellung gebracht, so dass die Fixierung der Plane 10 an der Mittelrunge 13 gelöst wird.

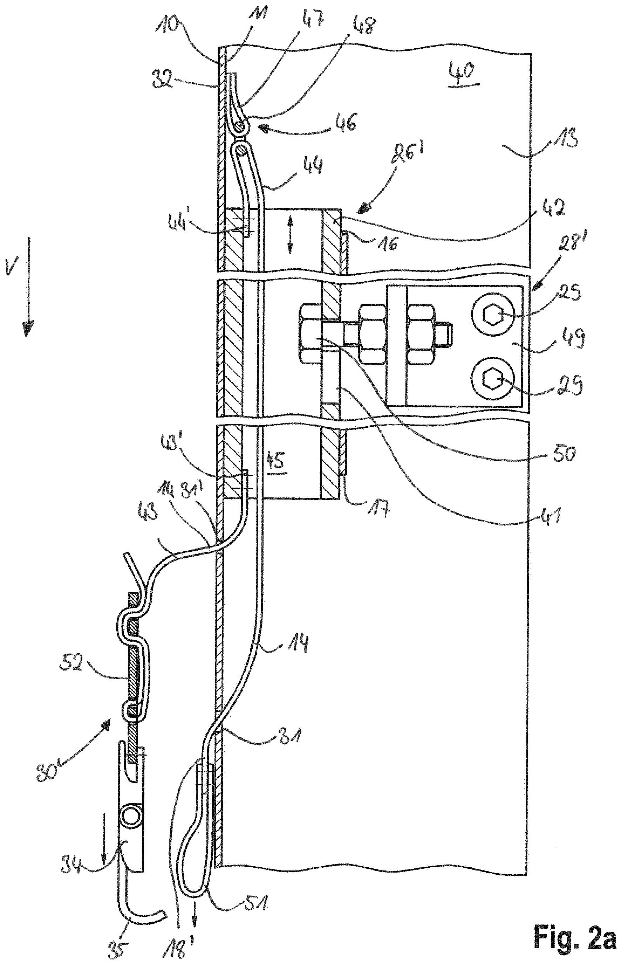

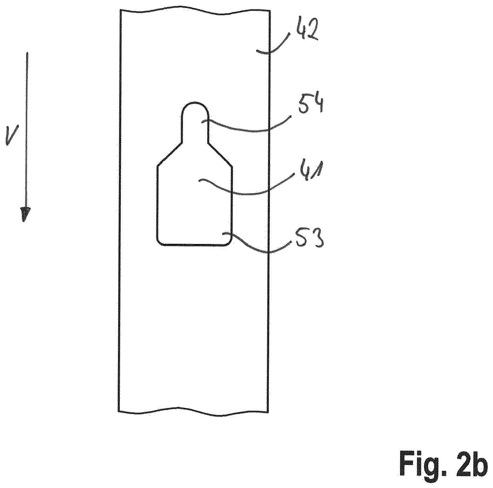

Fig. 2 zeigt eine weitere Ausführungsform hinsichtlich eines Befestigungssystems. In Fig. 2a wird ein Querschnitt durch einen Fahrzeugaufbau dargestellt.

Zu erkennen ist die Plane 10 mit einer Innenseite 11 sowie der Außenseite 32. Die Innenseite 11 ist die dem Laderaum 40 zugewandte Seite der Plane 10. Ebenfalls zu erkennen ist eine Mittelrunge 13. Auch gemäß Ausführungsform der Fig. 2a ist ein Zugelement 14 vorgesehen, das aus mehreren Abschnitten besteht. Das Zugelement 14 ist an der zum Laderaum 40 weisenden Innenseite 11 der Plane 10 angeordnet.

Das erste Befestigungselement 26', das der Plane 10 zugeordnet ist, ist als eine Aussparung 41 in einer Planke 42 ausgebildet. Die Planke 42 ist mit dem Zugelement 14 verbunden. Insbesondere kann das Zugelement 14 mit der Planke 42 verschraubt und/oder verklebt und/oder vernietet sein. Sowohl ein erster Abschnitt 43 des Zugelements 14 als auch ein zweiter Abschnitt 44 des Zugelements 14 sind an jeweils einem Ende 43' bzw. 44' mit der Planke 42 verbunden. Alternativ ist es denkbar, dass das Zugelement 14 lediglich einen Abschnitt aufweist und zwischen den dargestellten Enden 43' und 44' weiteres Material des Zugelements 14 ausgebildet ist.

Die Planke 42 ist nicht mit der Innenseite 11 der Plane 10 verbunden, so dass das Zugelement 14 und somit auch die Planke 42 in vertikaler Richtung V bzw. entgegen der vertikalen Richtung V bewegbar bzw. verschiebbar ist. Die Planke 42 ist in einer Planentasche 15a geführt, wobei die Planentasche eine obere Öffnung 16 sowie eine untere Öffnung 17 aufweist. Des Weiteren weist die Planentasche 15a im Bereich der Aussparung 41 eine Öffnung auf. Die Planke 42 ist hohl ausgebildet und weist somit einen Hohlraum 45 auf.

Der zweite Abschnitt 44 des Zugelements 14 ist zumindest abschnittsweise durch diesen Hohlraum 45 geführt. Der zweite Abschnitt 44 des Zugelements 14 ist über eine Umlenkeinheit 46 umgelenkt. Die Umlenkeinheit 46 umfasst eine an die Plane 10 angeschweißte und/oder vernähte und/oder verklebte Schlaufe 47. Durch diese Schlaufe 47 ist ein Ringelement 48 geführt. Das Zugelement 14, insbesondere der zweite Abschnitt 44 des Zugelements 14 ist durch dieses Ringelement 48 geführt.

Das Zugelement 14, insbesondere der zweite Abschnitt 44 des Zugelements 14, ist derart umgelenkt, dass die Aussparung 41 durch eine Zugbewegung bzw. Bewegung in Vertikalrichtung V an dem ersten Ende 18' des Zugelements 14 nach oben bzw. entgegen der Vertikalrichtung V bewegt werden kann.

An der Mittelrunge 13 ist das zweite Befestigungselement 28' ausgebildet. Das zweite Befestigungselement 28' umfasst einen Fangwinkel 49, der mit Hilfe von Schrauben 29 an der Mittelrunge 13 befestigt ist. An dem Fangwinkel 49 ist ein schraubenförmiges Element 50 ausgebildet. Das schraubenförmige Element 50, bzw. das zweite Befestigungselement 28' kann in die Aussparung 41, nämlich in das erste Befestigungselement 26' eingeführt werden. Sofern eine Zugbewegung an dem ersten Ende 18' des Zugelements 14 ausgeführt wird, werden das erste Befestigungselement 26' und das zweite Befestigungselement 28' in eine Lösestellung gebracht. Insbesondere das schraubenförmige Element 50 kann aus der Aussparung 41 gelöst werden.

Durch eine Zugbewegung am zweiten Ende 30' des Zugelements 14 wird die Planke 42 in vertikaler Richtung V bewegt. Ein in die Aussparung 41 eingeführtes schraubenförmiges Element 50 wird demnach mit der Aussparung 41 fest formschlüssig verbunden.

Das Zugelement 14 ist im Bereich des ersten Endes 18' mittels einer in der Seitenplane 10 ausgebildeten unteren Durchführung 31 vom Laderaum 40 nach außen geführt. Am ersten Ende 18' des Zugelements 14 ist außerdem eine Schlaufe 51 ausgebildet. Diese Schlaufe 51 dient dem Benutzer dazu, das erste Ende 18' des Zugelements 14 zu greifen und eine Zugbewegung in vertikaler Richtung V ausführen zu können.

Das Zugelement 14 ist außerdem im Bereich des zweiten Endes 30' von dem Laderaum 40 nach außen geführt. Hierzu ist eine obere Durchführung 31' in der Plane 10 ausgebildet. Im Bereich des zweiten Endes 30' ist ein planenspannerartiges Element 34 ausgebildet. Mit Hilfe des Hakens 35 kann das planenspannerartige Element 34 an einer Kante des Fahrzeugaufbaus verspannt fixiert werden.

Im Bereich des zweiten Endes 30' des Zugelements 14 ist außerdem eine Schlaufenplatte 52 ausgebildet. Mit Hilfe dieser Schlaufenplatte 52 kann die Länge des Zugelements 14 eingestellt werden. Dies ist insbesondere notwendig, wenn die Plane 10 aufgrund von Alterungserscheinungen nachlängt bzw. länger wird.

In Fig. 2b ist die Form der Aussparung 41 dargestellt. Diese gleicht im Wesentlichen einer Schlüssellochform, insbesondere einer umgedrehten bzw. auf den Kopf gestellten Schlüssellochform. Der erste, untere Abschnitt 53 der Aussparung 41 weist im Wesentlichen eine rechteckige Form auf, so dass das zweite Befestigungselement 26', insbesondere das schraubenförmige Element 50 in den unteren Abschnitt 53 der Aussparung 41 eingeführt werden kann. Sofern die Planke 42 in vertikaler Richtung V nach unten verschoben wird, wird der zweite, obere Abschnitt 54 der Aussparung 41, der insbesondere langlochförmig ausgebildet ist, in Richtung des schraubenförmigen Elements 50 bewegt. Der obere Abschnitt 53, insbesondere die Kanten des Abschnitts 53 liegen folglich auf dem zweiten Befestigungselement 28' auf, so dass eine feste formschlüssige Verbindung erzielt wird.

Die dargestellte Ausbildung eines ersten Befestigungselements 26' und eines zweiten Befestigungselements 28' ist vorzugsweise mehrmals in einer Planke 42 sowie an der Mittelrunge 13 ausgebildet. Dies bewirkt eine besonders feste Verbindung der Plane 10 an der Mittelrunge 13. Es ist möglich, dass an der Mittelrunge 13 auf einer horizontalen Höhe mehrere, insbesondere zwei, zweite Befestigungselemente 28' angeordnet sind. Beispielsweise weist auch die Planke 42 mindestens zwei nebeneinander angeordnete Aussparrungen 41 auf.

### Bezugszeichenliste

- 10: Plane
- 11: Innenseite Plane
- 12: Dachholm
- 13: Mittelrunge
- 14: Zugelement
- 15, 15', 15a: Planentasche
- 16: obere Öffnung
- 17: untere Öffnung
- 18, 18': erstes Ende Zugelement
- 19: Öse
- 20: elastisches Element
- 21: Schlaufe
- 22: Haken
- 23: Haken
- 24: freier Abschnitt
- 25: Seite Zugelement
- 26, 26': erstes Befestigungselement
- 27: Schweißgurt
- 28, 28': zweites Befestigungselement
- 29: Schraube
- 30, 30': zweites Ende Zugelement
- 31, 31': Durchführung
- 32: Außenseite Plane
- 33: Dachplane
- 34: planenspannerartiges Element
- 35: Haken
- 36: Kante
- 37: Plannenspanner
- 40: Laderaum
- 41: Aussparung
- 42: Planke
- 43: erster Abschnitt Zugelement
- 44: zweiter Abschnitt Zugelement
- 43', 44': Ende Abschnitt Zugelement
- 45: Hohlraum
- 46: Umlenkeinheit
- 47: Schlaufe
- 48: Ringelement
- 49: Fangwinkel
- 50: schraubenförmiges Element
- 51: Schlaufe
- 52: Schlaufenplatte
- 53: Abschnitt Aussparung
- 54: Abschnitt Aussparung
- F: Fahrtrichtung
- V: vertikale Richtung

## Patentansprüche

1. Fahrzeugaufbau, insbesondere für Nutzfahrzeuge, mit wenigstens einer Mittelrunge (13) und einer Plane (10), die in einem geschlossenen Zustand durch ein Befestigungssystem an der Mittelrunge (13) fixierbar ist und einen Laderaum (40) begrenzt, wobei das Befestigungssystem mindestens ein erstes der Plane (10) zugeordnetes Befestigungselement (26, 26') und mindestens ein zweites an der Mittelrunge (13) ausgebildetes Befestigungselement (28, 28') aufweist, wobei das erste Befestigungselement (26, 26') und das zweite Befestigungselement (28, 28') gegenseitig in lösbaren Eingriff bringbar sind, und wobei das erste Befestigungselement (26, 26') mit einem Zugelement (14) verbunden ist, das unabhängig von der Plane (10) von außerhalb des Laderaums betätigbar ist, **dadurch gekennzeichnet, dass** das Zugelement (14) in vertikaler Richtung (V) unabhängig von der Plane (10) bewegbar ist.

2. Fahrzeugaufbau nach Anspruch 1,
**dadurch gekennzeichnet, dass**
das Zugelement (14) an der zum Laderaum (40) weisenden Innenseite (11) der Plane (10) angeordnet ist.

3. Fahrzeugaufbau nach einem der Ansprüche 1 bis 2,
**dadurch gekennzeichnet, dass**
das erste Befestigungselement (26) am Zugelement (14) als Fanghaken ausgebildet ist.

4. Fahrzeugaufbau nach einem der vorhergehenden Ansprüche,
**dadurch gekennzeichnet, dass**
das erste Befestigungselement (26') als eine Aussparung (41) in einer Planke (42) oder einem plattenartigen Element ausgebildet ist, wobei die Planke (42) oder das plattenartige Element mittelbar oder unmittelbar mit dem Zugelement (14) verbunden ist.

5. Fahrzeugaufbau nach Anspruch 4,
**dadurch gekennzeichnet, dass**
die Aussparung (41) schlüssellochartig ausgebildet ist.

6. Fahrzeugaufbau nach einem der vorhergehenden Ansprüche,
**dadurch gekennzeichnet, dass**
das zweite Befestigungselement (28') winkelförmig oder schraubenförmig oder bolzenförmig ausgebildet ist.

7. Fahrzeugaufbau nach einem der vorhergehenden Ansprüche,
**dadurch gekennzeichnet, dass**
das zweite Befestigungselement (28) als ein von der Mittelrunge (13) seitlich abstehender Fangwinkel oder als eine seitlich abstehende Leiste ausgebildet ist.

8. Fahrzeugaufbau nach einem der vorhergehenden Ansprüche,
**dadurch gekennzeichnet, dass**
das Zugelement (14) ein planenspannerartiges Element (34) und/oder eine Schlaufe (51) aufweist, das an der Außenseite (32) der Plane (10), insbesondere im unteren Planenbereich, zugänglich angeordnet ist.

9. Fahrzeugaufbau nach einem der vorhergehenden Ansprüche,
**dadurch gekennzeichnet, dass**
ein erstes Ende (18) des Zugelements (14) im Laderaum (40), insbesondere in Nähe eines Dachholms (12), über ein elastisches Element (20), insbesondere über eine Feder und/oder über einen Expander, an der Innenseite (11) der Plane (10) und/oder an einem Abschnitt des Dachholms (12) und/oder an einem Seitenspriegel befestigt ist.

10. Fahrzeugaufbau nach einem der vorhergehenden Ansprüche,
**dadurch gekennzeichnet, dass**
das Zugelement (14) derart ausgebildet ist, dass das erste Befestigungselement (26, 26') und das zweite Befestigungselement (28, 28') durch eine Zugbewegung an einem zweiten Ende (30, 30') des Zugelements (14) von einer Lösestellung in eine Eingriffstellung bringbar sind.

11. Fahrzeugaufbau nach einem der vorhergehenden Ansprüche,
**dadurch gekennzeichnet, dass**
das Zugelement (14) im Laderaum (40), insbesondere in Nähe eines Dachholms (12), über eine, insbesondere ein rollenartiges oder ringförmiges Element (48) aufweisende, Umlenkeinheit (46) umgelenkt ist.

12. Fahrzeugaufbau nach Anspruch 11,
**dadurch gekennzeichnet, dass**
das Zugelement (14) derart umgelenkt ist, dass das erste Befestigungselement (26') und das zweite Befestigungselement (28') durch eine Zugbewegung an einem ersten Ende (18') des Zugelements (14) in eine Lösestellung bringbar sind.

13. Fahrzeugaufbau nach Anspruch 11 oder 12,
**dadurch gekennzeichnet, dass**
das Zugelement (14) derart umgelenkt ist, dass das erste Befestigungselement (26') und das zweite Befestigungselement (28') durch eine Zugbewegung an einem zweiten Ende (30') des Zugelements (14) in eine Eingriffstellung bringbar sind.

14. Nutzfahrzeug, insbesondere Planensattelauflieger, mit einem Fahrzeugaufbau nach einem der vorhergehenden Ansprüche.

15. Verfahren zum Herstellen eines Fahrzeugaufbaus oder eines Nutzfahrzeugs nach einem der vorhergehenden Ansprüche, wobei wenigstens ein zweites Befestigungselement (28, 28') des Befestigungssystems an der Mittelrunge (13) fixiert wird und wenigstens ein Zugelement (14), an dem mindestens ein erstes Befestigungselement (26, 26') des Befestigungssystems ausgebildet wird, im Laderaum (40), insbesondere in Nähe eines Dachholms (12), an der Innenseite (11) der Plane (10) und/oder an einem Abschnitt des Dachholms (12) und/oder an einem Seitenspriegel befestigt wird.

## Claims

1. A vehicle body, in particular for commercial vehicles, having at least a middle stake (13) and a tarpaulin (10), which can be fixed to the middle stake (13) by a fastening system and delimits a load space (40) when in a closed state, the fastening system having at least one first fastening element (26, 26') which is associated with the tarpaulin (10) and at least one second fastening element (28, 28') which is formed on the middle stake (13), it being possible to bring the first fastening element (26, 26') and the second fastening element (28, 28') into detachable engagement with each other,
and the first fastening element (26, 26') being connected to a pulling element (14) which can be actuated from outside the load space independently of the tarpaulin (10),
**characterised in that**
the pulling element (14) can be moved in a vertical direction (V) independently of the tarpaulin (10).

2. The vehicle body according to Claim 1,
**characterised in that**
the pulling element (14) is arranged on the inside (11) of the tarpaulin (10), facing the load space (40).

3. The vehicle body according to either of Claims 1 to 2,
**characterised in that**
the first fastening element (26) is in the form of a catch hook on the pulling element (14).

4. The vehicle body according to any one of the preceding claims,
**characterised in that**
the first fastening element (26') is in the form of a cut-out (41) in a plank (42) or a planar element, wherein the plank (42) or the planar element is connected directly or indirectly to the pulling element (14) .

5. The vehicle body according to Claim 4,
**characterised in that**
the cut-out (41) is keyhole-shaped.

6. The vehicle body according to any one of the preceding claims,
**characterised in that**
the second fastening element (28') is angled or helical or bolt-shaped.

7. The vehicle body according to any one of the preceding claims,
**characterised in that**
the second fastening element (28) is in the form of a catch bracket protruding laterally from the middle stake (13) or a laterally protruding strip.

8. The vehicle body according to any one of the preceding claims,
**characterised in that**
the pulling element (14) has a tarpaulin-clamp-like element (34) and/or a loop (51) which is arranged accessibly on the outside (32) of the tarpaulin (10), in particular in the lower tarpaulin region.

9. The vehicle body according to any one of the preceding claims,
**characterised in that**
a first end (18) of the pulling element (14) is fastened in the load space (40), in particular in the vicinity of a roof post (12), via an elastic element (20), in particular via a spring and/or expander, to the inside (11) of the tarpaulin (10) and/or to a section of the roof post (12) and/or to a side bow.

10. The vehicle body according to any one of the preceding claims,
**characterised in that**
the pulling element (14) is designed such that the first fastening element (26, 26') and the second fastening element (28, 28') can be brought from a detached position into an engaged position by a pulling movement on a second end (30, 30') of the pulling element (14).

11. The vehicle body according to any one of the preceding claims,
**characterised in that**
the pulling element (14) is deflected in the load space (40), in particular in the vicinity of a roof post (12), via a deflection unit (46), in particular having a roller-like or annular element (48).

12. The vehicle body according to Claim 11,
**characterised in that**
the pulling element (14) is deflected such that the first fastening element (26') and the second fastening element (28') can be brought into a detached position by a pulling movement on a first end (18') of the pulling element (14).

13. The vehicle body according to Claim 11 or 12,
**characterised in that**
the pulling element (14) is deflected such that the first fastening element (26') and the second fastening element (28') can be brought into an engaged position by a pulling movement on a second end (30') of the pulling element (14).

14. A commercial vehicle, in particular a curtain-sided semi-trailer, having a vehicle body according to any one of the preceding claims.

15. A method for producing a vehicle body or a commercial vehicle according to any one of the preceding claims, wherein at least one second fastening element (28, 28') of the fastening system is fixed to the middle stake (13), and at least one pulling element (14), on which at least one first fastening element (26, 26') of the fastening system is formed, is fastened in the load space (40), in particular in the vicinity of a roof post (12), to the inside (11) of the tarpaulin (10) and/or to a section of the roof post (12) and/or to a side bow.

## Revendications

1. Superstructure de véhicule, destinée notamment à des véhicules utilitaires, pourvue d'un rancher central (13) et d'une bâche (10), qui dans une position fermée est susceptible de se fixer par un système de fixation sur le rancher central (13) et qui délimite un espace de chargement (40), le système de fixation comportant au moins un premier élément de fixation (26, 26') associé à la bâche (10) et au moins un deuxième élément de fixation (28, 28') conçu sur le rancher central (13), le premier élément de fixation (26, 26') et le deuxième élément de fixation (28, 28') étant susceptibles d'être amenés réciproquement en engagement amovible,
et le premier élément de fixation (26, 26') étant relié avec un élément de traction (14), qui indépendamment de la bâche (10) est susceptible d'être manœuvré à partir de l'extérieur de l'espace de chargement,
**caractérisée en ce que**
l'élément de traction (14) est mobile en direction verticale (V), indépendamment de la bâche (10).

2. Superstructure de véhicule selon la revendication 1,
**caractérisée en ce que**
l'élément de traction (14) est placé sur la face intérieure (11) de la bâche (10) qui est dirigée vers l'espace de chargement (40).

3. Superstructure de véhicule selon l'une quelconque des revendications 1 à 2,
**caractérisée en ce que**
le premier élément de fixation (26) est conçu sous la forme d'un crochet de capture sur l'élément de traction (14).

4. Superstructure de véhicule selon l'une quelconque des revendications précédentes,
**caractérisée en ce que**
le premier élément de fixation (26') est conçu sous la forme d'une encoche (41) dans une planche (42) ou dans un élément en forme de plaque, la planche (42) ou l'élément en forme de plaque étant relié(e) indirectement ou directement avec l'élément de traction (14).

5. Superstructure de véhicule selon la revendication 4,
**caractérisée en ce que**
l'encoche (41) est conçue sous la forme d'un trou de serrure.

6. Superstructure de véhicule selon l'une quelconque des revendications précédentes,
**caractérisée en ce que** le deuxième élément de fixation (28') est conçu sous forme angulaire, sous forme hélicoïdale ou sous la forme de goujon.

7. Superstructure de véhicule selon l'une quelconque des revendications précédentes,
**caractérisée en ce que**
le deuxième élément de fixation (28) est conçu sous la forme d'une équerre de capture débordant latéralement du rancher central (13) ou d'une baguette débordant latéralement.

8. Superstructure de véhicule selon l'une quelconque des revendications précédentes,
**caractérisée en ce que** l'élément de traction (14) comporte un élément (34) en forme de tendeur de bâche et/ou une boucle (51) qui est placé(e) en étant accessible sur la face extérieure (32) de la bâche (10), notamment dans la zone inférieure de la bâche.

9. Superstructure de véhicule selon l'une quelconque des revendications précédentes,
**caractérisée en ce**
**qu'**une première extrémité (18) de l'élément de traction (14) est fixée dans l'espace de chargement (40), notamment à proximité d'un longeron de toit (12), par l'intermédiaire d'un élément élastique (20), notamment par l'intermédiaire d'un ressort et/ou d'un extenseur sur la face intérieure (11) de la bâche (10) et/ou sur un tronçon du longeron de toit (12) et/ou sur un arceau latéral.

10. Superstructure de véhicule selon l'une quelconque des revendications précédentes,
**caractérisée en ce que**
l'élément de traction (14) est conçu de telle sorte que le premier élément de fixation (26, 26') et le deuxième élément de fixation (28, 28') soient susceptibles d'être amenés par un mouvement de traction exercé sur une deuxième extrémité (30, 30') de l'élément de traction (14) d'une position détachée dans une position d'engagement.

11. Superstructure de véhicule selon l'une quelconque des revendications précédentes,
**caractérisée en ce que**
l'élément de traction (14) est renvoyé dans l'espace de chargement (40), notamment à proximité d'un longeron de toit (12), par l'intermédiaire d'une unité de renvoi (46) comportant notamment un élément (48) en forme de galet ou en forme de rouleau.

12. Superstructure de véhicule selon la revendication 11,
**caractérisée en ce que**
l'élément de traction (14) est renvoyé de telle sorte que le premier élément de fixation (26') et le deuxième élément de fixation (28') soient susceptibles d'être amenés dans une position détachée, par un mouvement de traction exercé sur la première extrémité (18') de l'élément de traction (14).

13. Superstructure de véhicule selon la revendication 11 ou 12,
**caractérisée en ce que**
l'élément de traction (14) est renvoyé de telle sorte que le premier élément de fixation (26') et le deuxième élément de fixation (28') soient susceptibles d'être amenés dans une position d'engagement, par un mouvement de traction exercé sur une deuxième extrémité (30') de l'élément de traction (14).

14. Véhicule utilitaire, notamment remorque de camion bâché, pourvu d'une superstructure de véhicule selon l'une quelconque des revendications précédentes.

15. Procédé, destiné à fabriquer une superstructure de véhicules ou un véhicule utilitaire selon l'une quelconque des revendications précédentes, au moins un deuxième élément de fixation (28, 28') du système de fixation étant fixé sur le rancher central (13) et au moins un élément de traction (14), sur lequel est conçu au moins un premier élément de fixation (26, 26') du système de fixation étant fixé dans l'espace de chargement (40), notamment à proximité d'un longeron de toit (12), sur la face intérieure (11) de la bâche (10) et/ou sur un tronçon du longeron de toit (12) et/ou sur un arceau latéral.
